Europäisches Patentamt

European Patent Office

Office européen des brevets

(11) Numéro de publication: **0 278 805 B1**

# FASCICULE DE BREVET EUROPEEN

(45) Date de publication de fascicule du brevet: **02.09.92**  (51) Int. Cl.⁵: **C01F 7/60**, B01D 7/02

(21) Numéro de dépôt: **88400075.3**

(22) Date de dépôt: **14.01.88**

(54) **Procédé de condensation du chlorure d'aluminium.**

(30) Priorité: **27.01.87 FR 8700938**

(43) Date de publication de la demande:
**17.08.88 Bulletin  88/33**

(45) Mention de la délivrance du brevet:
**02.09.92 Bulletin  92/36**

(84) Etats contractants désignés:
**AT BE CH DE ES FR GB GR IT LI LU NL SE**

(56) Documents cités:
**FR-A- 2 152 958**
**GB-A- 1 410 800**
**US-A- 2 852 517**

**CHEMICAL ABSTRACTS, vol. 73, no. 10, 7
septembre 1970, page 465, résumé no.
51742h, Columbus, Ohio, US; R.C. HOWIE et
al.: "Purifying hundred-gram quantities of
aluminum chloride", & INORG. NUCL. CHEM.
LETT. 1970, 6(4), 399-401**

**CHEMICAL ABSTRACTS, vol. 99, no. 6, 1983,
page 124, résumé no. 40627k, Columbus,
Ohio, US; & SU-A-1 018 910 (S.S. BERKETOV
et al.) 23-05-1983**

(73) Titulaire: **ELF ATOCHEM S.A.**
**4 & 8, Cours Michelet La Défense 10**
**F-92800 Puteaux(FR)**

(72) Inventeur: **Dugua, Jacques**
**241 Chemin des Flachères**
**F-69390 Charly Par Vernaison(FR)**
Inventeur: **Adrian, Jean-Claude**
**15, Le Prés du Seigneur**
**F-69630 Chaponost(FR)**

## Description

La présente invention concerne un procédé de condensation du chlorure d'aluminium anhydre.

Le chlorure d'aluminium est utilisé souvent comme catalyseur en chimie organique et aussi dans l'industrie des cosmétiques. En cours de fabrication le chlorure d'aluminium est obtenu en phase gazeuse éventuellement mélange à d'autres produits et on l'isole en le condensant sur une paroi froide à température ambiante. On obtient ainsi une croûte de chlorure d'aluminium qu'on décolle de la paroi par des moyens mécaniques tels que vibrations, chocs. La paroi froide est simplement la paroi intérieure d'un réservoir en acier exposé à l'air ambiant.

Les croûtes de chlorure d'aluminium sont broyées pour obtenir un produit dont les morceaux de formes diverses sont inférieurs à 5 cm dans leur plus grande dimension. Le broyage produit de la poussière, il faut tamiser le chlorure d'aluminium et recycler les fines. Les demandes de brevets japonais 34988/70 et 34989/70 du 23 Avril 1970, la demande japonaise 42243/70 du 18 Mai 1970 décrivent un procédé pour isoler le chlorure d'aluminium en phase gazeuse consistant à faire passer le gaz sur une paroi maintenue à 80 ou 85°C, puis quand le chlorure d'aluminium a formé des cristaux, on réchauffe cette paroi à 220°C pour décoller le chlorure d'aluminium qu'on récupère. Souvent ces cristaux, lors de leur formation et leur grossissement, ont tendance à coller entre eux et à former une croûte qu'il est nécessaire de broyer et tamiser.

Dans ces demandes on décrit la condensation du chlorure d'aluminium sur des parois planes dans des conditions particulières de température ; on sur la paroi intérieure d'un cylindre équipé d'une lame raclante à la base pour recueillir le chlorure d'aluminium et l'évacuer. Dans tous ces procédés le chlorure d'aluminium est récupéré sous forme d'agglomérats où de plaques qu'il est difficile d'évacuer de la capacité dans laquelle on les a produit. Si on n'utilise pas de dispositif mécanique pour réduire ces agglomérats, on risque d'obstruer la sortie de la capacité. De plus, dans tous ces procédés, les appareillages sont soumis à des cycles thermiques qui provoquent des fatigues conduisant à des ruptures.

Dans INORG - NUCL - CHEM - LETT - 1970, 6 (4), 399-401 on cite la récupération de chlorure d'aluminium par la condensation de la phase gazeuse d'un mélange NaCl-Alcl3 sur un tube unique froid. Ce tube est ensuite transféré dans un autre récipient puis on provoque le détachement du chlorure d'aluminium en branchant une résistance électrique contenue dans ledit tube. Le brevet GB 1410800 décrit un appareillage pour condenser un produit sous forme solide sur un faisceau de tubes refroidis. Après la condensation le condensat est totalement fondu par chauffage fourni par un serpentin enroulé à l'extérieur de l'appareillage.

On a maintenant trouvé un procédé qui permet de produire du chlorure d'aluminium qui ne peut pas se mettre sous la forme de plaques et qui utilise un appareillage qui est beaucoup moins sensible aux contraintes thermiques que les appareils de la technique antérieure.

Le procédé est caractérisé en ce que le chlorure d'aluminium seul on contenu dans un courant gazeux est condensé en phase solide à l'extérieur de tubes essentiellement verticaux fermés à leur extrémité inférieure et fixés à leur extrémité supérieure à une plaque tubulaire, lesdits tubes étant ensuite réchauffés pour que le chlorure d'aluminium se détache des tubes.

Ce procédé s'applique à tous les gas contenant du chlorure d'aluminium, et plus particulièrement à ceux obtenus au cours de sa fabrication.

Au cours de la fabrication du chlorure d'aluminium on obtient dans l'une des étapes des procédés utilisés, le chlorure d'aluminium sous forme d'un gaz soit pur soit en mélange avec d'autres gaz qui peuvent être des inertes, tels que de l'azote ou de l'air ou des résidus de réaction tels que du gaz carbonique, de l'oxyde de carbone, du chlore, des produits chlorés, etc ... Ce peut être une étape d'un procédé de fabrication du chlorure d'aluminium en tant que tel, ou une étape d'un procédé au cours duquel on prépare du chlorure d'aluminium en vue de fabriquer de l'aluminium.

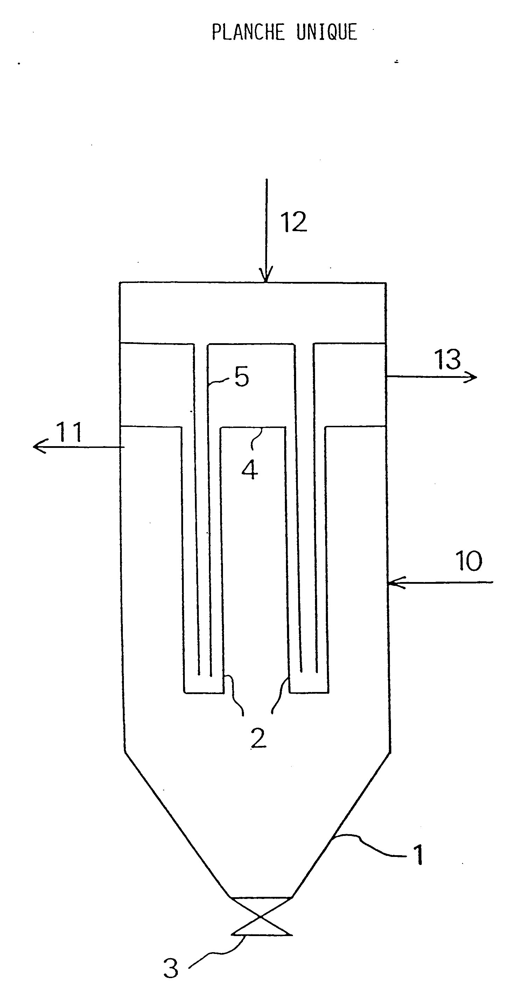

La planche unique est un exemple d'un dispositif pour la mise en oeuvre du procédé selon l'invention. Des tubes (2) verticaux, obturés en partie basse, sont soudés en partie haute sur une plaque tubulaire (4) et disposés dans une capacité (1) fermée dans sa partie basse par une vanne (3). On introduit en (10) le gaz contenant le chlorure d'aluminium, par la tubulure (11) on dégaze les incondensables. On introduit en (12) un fluide caloporteur qui est distribué par des tubes (5) dans chaque tube (2) puis est évacué par la tubulure (13).

Le gaz contenant le chlorure d'aluminium est mis en contact avec la paroi extérieure de tubes essentiellement verticaux. Ces tubes sont maintenus entre 40 et 60°C pour que le chlorure d'aluminium cristallise, puis on réchauffe ces tubes, par exemple, par circulation d'un fluide caloporteur pour sublimer le chlorure d'aluminium en contact avec le tube, le chlorure d'aluminium se détache et on le recueille par gravité.

Les tubes essentiellement verticaux peuvent être de dimensions quelconques mais on préfère que le rapport de leur hauteur sur leur diamètre extérieur soit entre 1 et 100 et avantageusement entre 2 et 50. Ces tubes peuvent être en matériau quelconque pourvu qu'il résiste au chlorure d'aluminium ; on utilise de préférence de l'acier ordinaire, de l'acier inoxydable ou un alliage à base de nickel. O préfère aussi que la surface extérieure de ces tubes soit lisse. On préfère que ces tubes soient disposés dans une capacité. On maintient de préférence les parois intérieures de cette capacité à une température suffisamment élevée pour éviter que du chlorure d'aluminium ne se dépose dessus. Cette capacité peut être munie en partie basse d'un organe de fermeture tel qu'une vanne. On ne sortirait pas du cadre de l'invention en utilisant des tubes de forme conique dont la plus grande section se trouve en partie haute, coté plaque tubulaire.

Le gaz contenant le chlorure d'aluminium étant introduit dans cette capacité, le chlorure d'aluminium se dépose sur les tubes et les incondensables sont dégazés de préférence par un orifice différent de l'entrée des gaz contenant le chlorure d'aluminium.

La température de la paroi des tubes est maintenue entre 40 et 60°C à l'aide d'un fluide caloporteur. On peut utiliser un fluide caloporteur quelconque tel qu'un gaz, un produit organique, de l'eau chaude, de la vapeur basse pression ...

Quand on utilise une paroi métallique la température du fluide est très voisine de la température de la paroi. Il suffit alors pour ajuster la température de la paroi, d'ajuster la température du fluide caloporteur. La température de la paroi est maintenue entre 40 et 60°C. On préfère aussi que la température de la paroi soit maintenue constante pendant la condensation du chlorure d'aluminium.

Dans ces conditions le chlorure d'aluminium se condense sous forme de granulés qui ont essentiellement la forme d'un cône. La hauteur du cône est comprise entre 0,5 et 5 cm et le rapport hauteur sur diamètre à la base est compris entre 1 et 10. La pointe du cône est contre la paroi froide, les cônes se touchent par leur base et ne sont en général ni collés ni agglomérés entre eux.

La pression du gaz contenant du chlorure d'aluminium est sans importance, de même que la pression dans la capacité. Presque toujours ce gaz est à la pression atmosphérique ou très proche, et on effectue la condensation du chlorure d'aluminium à cette pression. Dès que le chlorure d'aluminium est en contact avec la paroi froide, il se condense. Pour récupérer le chlorure d'aluminium solide on élève la température de la paroi précédemment froide pour que le chlorure d'aluminium se liquéfie ou se sublime, ce qui provoque le détachement du solide par gravité. On obtient une liquéfaction ou une sublimation selon que la pression est supérieure ou inférieure à celle du point triple (2,3 atm abs). On préfère que le solide se détache sous l'effet de la sublimation. Il suffit de chauffer la paroi un court instant seulement pour provoquer le décollement du solide. Le plus souvent on chauffe entre 200 et 250°C.

Pour chauffer la paroi on peut utiliser un fluide caloporteur qu'on chauffe à la température suffisante pour que la paroi soit assez chaude pour liquéfier ou sublimer le chlorure d'aluminium. On peut utiliser le même fluide caloporteur que celui qui porte la paroi entre 40 et 60°C mais dont on change la température par tout moyen connu ; on peut aussi avoir un réservoir de fluide chaud et un réservoir de fluide froid, ces deux fluides pouvant être identiques ou différents, et on les fait circuler alternativement contre la paroi.

Pendant qu'on réchauffe la paroi pour décoller le chlorure d'aluminium on peut arrêter l'introduction du gaz contenant le chlorure d'aluminium dans la capacité pour éviter de perdre du produit. Il est préférable de chauffer rapidement la paroi pour ne pas chauffer tout le solide.

Pendant le chauffage qui provoque le décollage du chlorure d'aluminium de la paroi il peut se sublimer un peu de chlorure d'aluminium ; il est donc intéressant que ce chlorure d'aluminium puisse se déposer sur une paroi froide, par exemple dans une autre capacité reliée à la précédente. Il est commode si on doit traiter un courant gazeux continu contenant du chlorure d'aluminium, de prévoir au moins deux capacités, l'une ayant une paroi froide, l'autre étant en chauffage pour décoller le chlorure d'aluminium ; et on alterne ensuite les fonctions des capacités. On pourrait aussi avoir un nombre quelconque de capacités. Au lieu d'une capacité dont on utilise la paroi froide intérieure pour recueillir le chlorure d'aluminium, on peut avoir des parois froides disposées de façon quelconque dans des capacités, ou autres volumes ou disposées sur le passage des gaz contenant le chlorure d'aluminium. On peut aussi avoir dans la même capacité des parois froides sur lesquelles se cristallise le chlorure d'aluminium et des parois chaudes avec du chlorure d'aluminium que se décolle. Un avantage d'utiliser des tubes selon la présente invention, fixés par une seule de leurs extrémités à une plaque tubulaire, est qu'ils ne sont pas soumis à des dilatations différentielles lors des cycles thermiques. L'exemple suivant illustre l'invention sans la limiter.

EXEMPLE :

On utilise un appareil comme décrit sur la planche unique de dimensions suivantes :
- diamètre de la plaque tubulaire (4) : 750 mm

- 8 tubes (2) disposés régulièrement selon une maille carrée de 210 mm et tels qu'on ait :

| . 2 tubes de diamètre extérieur 88,9 épaisseur en acier | 3,2 mm |
| . 2 tubes de diamètre extérieur 88,9 épaisseur en Inconel 600 | 3,05 mm |
| . 2 tubes de diamètre extérieur 88,9 épaisseur en Monel 400 | 3.05 mm |
| . 2 tubes de diamètre extérieur 88,9 épaisseur en uranus B6 | 4 mm |

- la longueur utile des tubes est 700 mm
- les autres parties du dispositif sont en acier
- la partie cylindrique et la partie conique de la capacité (1) sont maintenues à 200°C.
- la vanne (3) est une vanne à passage direct de $\varnothing$ 200 mm.

On introduit le chlorure d'aluminium par le tuyau (10) au débit de 30 kg/h pendant 6 heures. La température de la paroi des tubes (2) est maintenue à 55°C par circulation de fluide caloporteur. La température du fluide caloporteur est 50°C, mesurée à la tubulure (13).

Après 6 heures, on modifie le circuit pour passer le caloporteur à 260°C et amener la paroi à 190°C le plus rapidement possible, environ 1 minute. Après 1 minute environ, l'AlCl$_3$ se décroche et est récupéré dans une capacité placée sous le desublimateur isolée par une vanne à passage direct de $\varnothing$ = 200.

On obtient 180 kg d'AlCl$_3$ sous forme de cônes de longueur 30 à 35 mm, de $\varnothing$ à l'extrémité de 8 à 12 mm.

Le décollement est total après 2 minutes environ, on repasse le caloporteur à 50°C qui est prêt pour le cycle suivant.

## Revendications

**1.** Procédé de condensation du chlorure d'aluminium dans lequel

a/ le chlorure d'aluminium seul ou contenu dans un courant gazeux est condensé en phase solide à l'extérieur de tubes essentiellement verticaux fermés à leur extrémité inférieure et fixés à leur extrémité supérieure à une plaque tubulaire,

b/ pendant la condensation, la température des tubes est maintenue entre 40 et 60°C,

c/ les tubes sont ensuite réchauffés pour que le chlorure d'aluminium se détache.

## Claims

**1.** Process for condensing aluminium chloride, in which

a) aluminium chloride by itself or contained in a gas stream is condensed to a solid phase outside essentially vertical tubes closed at their lower end and secured to a tube plate at their upper end,

b) during the condensation the temperature of the tubes is maintained between 40 and 60°C,

c) the tubes are then heated in order that the aluminium chloride may come away.

## Patentansprüche

**1.** Verfahren zur Kondensation von Aluminiumchlorid, bei dem

a) Aluminiumchlorid allein oder enthalten in einem Gasstrom außerhalb von im wesentlichen senkrechten, an ihrem unteren Ende geschlossenen und an ihrem oberen Ende an einem Rohrboden befestigten Rohren als feste Phase kondensiert wird,

b) während der Kondensation die Temperatur der Rohre zwischen 40 und 60°C gehalten wird,

c) die Rohre anschließend wieder aufgeheizt werden, damit sich das Aluminiumchlorid ablöst.

PLANCHE UNIQUE